# EUROPEAN PATENT APPLICATION

(11) **EP 2 383 912 A2**
(43) Date of publication of application: **02.11.2011**
(21) Application number: 11150628.3
(22) Date of filing: 11.01.2011
(51) Int. Cl.: H04B 15/00

(54) **Input device and control method of the same**

(30) Priority: 28.04.2010 KR 20100039646; 19.07.2010 KR 20100069659
(71) Applicant: SAMSUNG ELECTRONICS CO., LTD., Suwon-si, Gyeonggi-do (KR)
(72) Inventor: Soh, Byung-seok, Gyeonggi-do (KR); Choi, Sang-on, Gyeonggi-do (KR); Choi, Yong-wan, Gyeonggi-do (KR)
(74) Representative: Bruce, Alexander Richard Henry

(57) **Abstract**

Disclosed are an input device, a method of controlling the input device and a system including the input device and a display device. The input device may include: a communication unit operable to communicate with a display device; a sensor operable to sense a first signal containing noise and a scan signal generated from the display device, and a second signal containing the noise; a noise eliminator operable to compare the first signal and the second signal; and a controller operable to control the communication unit to output position information of the input device, wherein the position information is based on the comparing of the first signal and the second signal.

## Description

The present invention relates to an input device and a control method of the same, and more particularly to an input device which can reduce an error that may occur due to electromagnetic interference (EMI) with an electronic device when the input device and the electronic device are close to each other, and a control method of the same.

Electromagnetic interference (EMI) refers to electromagnetic waves collaterally radiated from an electronic device which may affect operation of the electronic device itself or other electronic devices. Most electronic devices generate electromagnetic noise even though there may be differences among them, and the generated electromagnetic noise may cause EMI that disturbs other electronic devices via a predetermined medium. At the same time, most electronic devices are affected by the EMI due to the electromagnetic noise introduced from the outside. For example, a clock pulse generator built in a computer system generates a clock pulse with a lot of harmonic components. Such a harmonic component is radiated to surrounding space or conducted through a power line, thereby deteriorating video or audio quality of a neighboring television or the like.

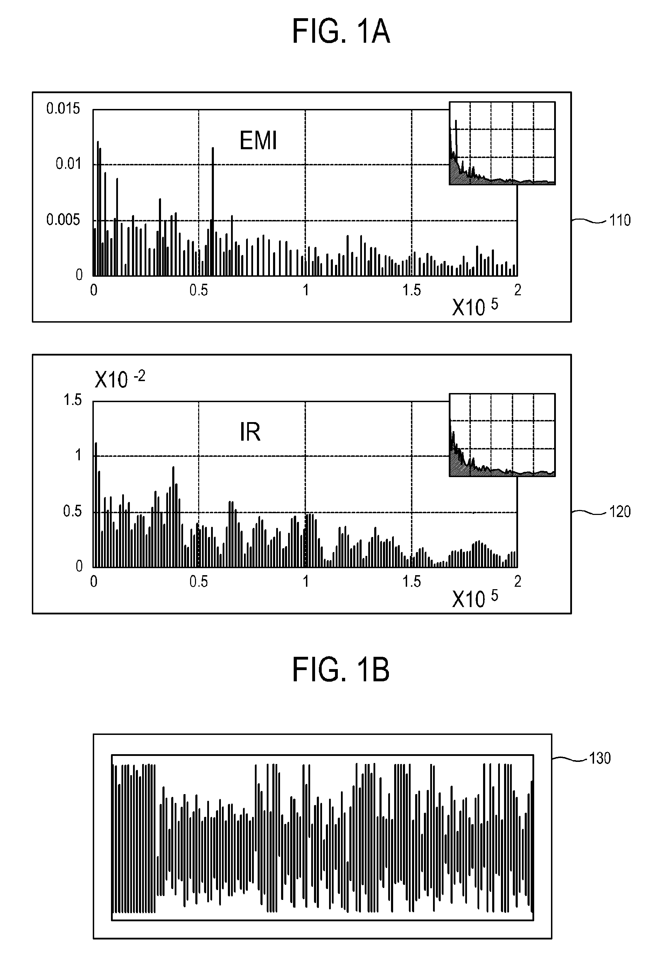

FIG. 1A shows a frequency analysis of an example of an EMI noise pattern and an infrared (IR) pattern.

An input device can calculate its coordinate information by sensing a signal generated from the electronic device, and transmit the coordinate information to the electronic device or peripheral devices. For example, a pointing device may obtain the coordinate information of the pointing device by sensing an infrared (IR) signal generated in a display device, and transmit the obtained coordinate information to the display device or a computer.

In this case, a frequency of an infrared pattern generated by the display device is as shown in a lower graph 120 of FIG. 1A.

If the display device and the pointing device are close to each other, EMI noise is generated between the display device and the pointing device by electromagnetic waves respectively generated from the display device and the pointing device. The frequency of the generated EMI noise pattern is as shown in an upper graph 110 of FIG. 1A.

Referring to the upper graph 110 and the lower graph 120, the EMI noise pattern and the infrared pattern have a similar frequency band.

FIG. 1B shows a frequency analysis of a signal in which the EMI noise and infrared patterns are mixed.

When the input device senses infrared generated from the electronic device, the input device senses not an original signal generated from the electronic device but a signal corrupted with the EMI noise. In this case, the frequencies of the EMI noise and infrared patterns corresponding to a certain arbitrary frequency band are put together so that the frequency of the sensed signal is overall amplified as shown in a graph 130 of FIG. 1B.

To shield the EMI noise generated between the electronic device and the input device or between the electronic device and other electronic devices, most conventional methods have been developed for hardware. For example, an EMI shield is formed by metal coating or applying a conductive-paint, or the EMI is removed by a conductive synthetic forming compound or the like. However, the conventional methods for hardware have various problems when applicability depending on a complicated shape of a target device, shielding capability, costs, etc. are taken into account.

Further, it is not easy for a conventional signal processing method to separate the signal generated from the electronic device and the EMI when they are output as mixed.

An aspect of the present invention provides an input device which may include: a communication unit operable to communicate with a display device; a sensor operable to sense a first signal containing noise and a scan signal generated from the display device, and a second signal containing the noise; a noise eliminator operable to compare the first signal and the second signal; and a controller operable to control the communication unit to output position information of the input device, wherein the position information is based on the comparing of the first signal and the second signal.

The sensor may include: a first circuit operable to sense the first signal; and a second circuit operable to sense the second signal, wherein the first circuit includes a photo-detector operable to sense the scan signal generated from the display device.

The first circuit and the second circuit may be disposed symmetrically to each other with respect to an axis of the input device.

The noise eliminator may compare the first signal and the second signal by determining a difference between the first signal and the second signal.

The display device may include a display panel, wherein the display panel may include a plasma display panel (PDP).

The input device may include a pen-type pointing device.

The position information of the input device may include coordinate information of the input device.

The sensor may be operable to determine points of time at which a sync signal, which indicates a start of a scan of the display device, and the first signal are sensed, and wherein the controller determines the coordinate information of the input device based on the points of time at which the sync signal and the first signal are sensed.

The position information of the input device may correspond to a difference between points of time at which the sync signal and the first signal are sensed.

The controller may be further operable to control the communication unit to output the position information to the display device.

The communication unit may be further operable to communicate with an external source, and wherein the controller may be further operable to control the communication unit to output the position information to the external source.

Another aspect of the present invention includes a method of controlling an input device, wherein the method may include: sensing a first signal containing noise and a scan signal generated from a display device; sensing a second signal containing the noise; comparing the first signal and the second signal; and outputting position information of the input device, wherein the position information is based on the comparing of the first signal and the second signal.

The comparing of the first signal and the second signal may include determining a difference between the first signal and the second signal.

The method may further include: determining points of time at which a sync signal which indicates a start of a scan period of the display device, and the first signal are sensed, and determining the coordinate information of the input device based on the points of time at which the sync signal and the first signal are sensed.

The position information may correspond to a difference between points of time at which the sync signal and the first signal are sensed.

The outputting of the position information may include outputting the position information to the display device.

The outputting of the position information may include outputting the position information to an external source.

Another aspect of the present invention includes a system which may include a display device and an input device, wherein the input device senses a first signal containing noise and a scan signal generated from the display device, senses a second signal containing the noise, compares the first and second signal, outputs position information of the input device to the display device, wherein the position information is based on the comparing of the first signal and the second signal, and wherein the display device performs a control operation based on the position information received from the input device.

The system may further include an external source which communicates with the input device, wherein the input device further outputs the position information to the external source.

The above and/or other aspects will become apparent and more readily appreciated from the following description of the exemplary embodiments, taken in conjunction with the accompanying drawings, in which:
FIG. 1A shows a frequency analysis of an EMI noise pattern and an infrared pattern;
FIG. 1B shows a frequency analysis of a signal in which the EMI noise and infrared patterns are mixed;
FIG. 2A is a block diagram showing a configuration of an input device according to an exemplary embodiment;
FIG. 2B is a block diagram showing a configuration of an input device according to an exemplary embodiment;
FIG. 3 shows a waveform of a signal sensed in an input device according to an exemplary embodiment;
FIG. 4 schematically shows that a signal is processed in a noise eliminator according to an exemplary embodiment;
FIG. 5 shows a circuit diagram of a sensor and the noise eliminator according to an exemplary embodiment;
FIG. 6A shows a printed circuit board (PCB) pattern shown in the circuit diagram of FIG. 5;
FIG. 6B is a graph showing an EMI noise level measured in accordance with distance;
FIG. 6C is an enlarged cross-section of the input device according to an exemplary embodiment;
FIG. 7A is a control flowchart of the input device according to an exemplary embodiment;
FIG. 7B is a control flowchart of the input device according to an exemplary embodiment;
FIG. 8 is a block diagram showing a configuration of a display device according to an exemplary embodiment; and
FIG. 9 is a control flowchart of the display device according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

An input device 200 according to an exemplary embodiment may be variously achieved depending on its operation types.

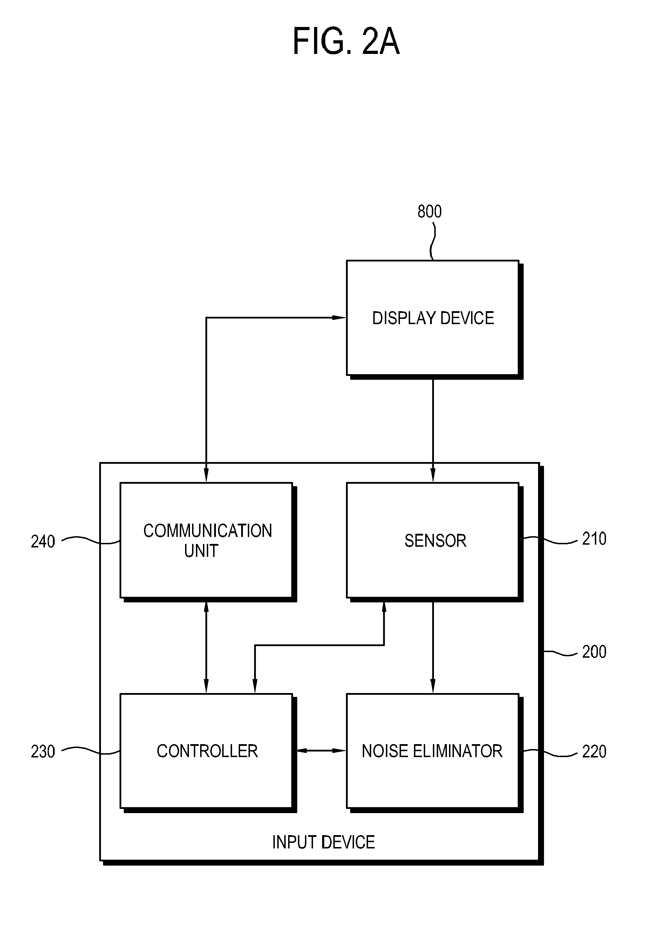

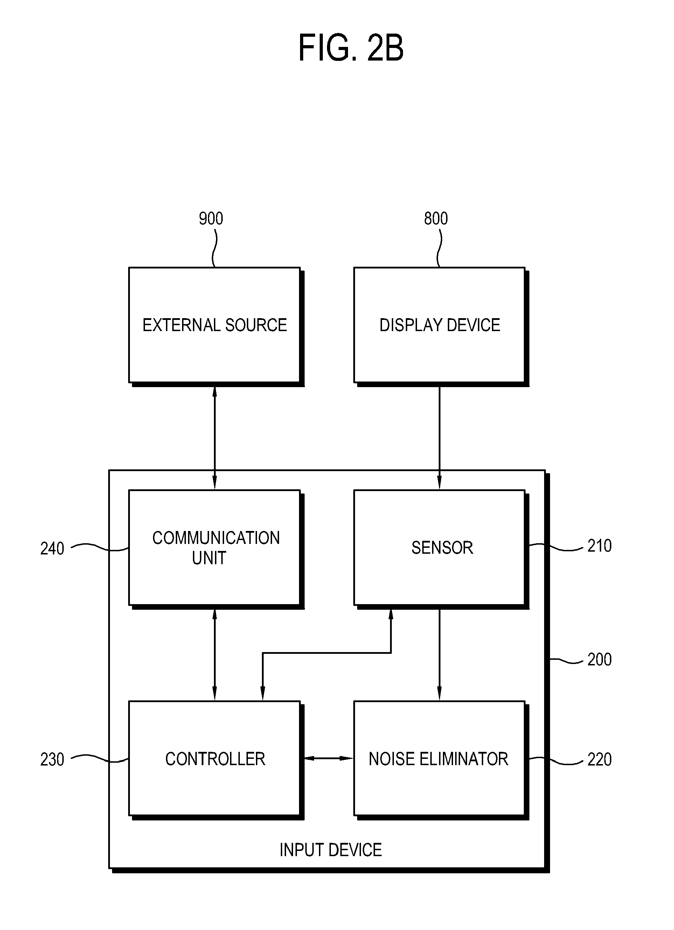

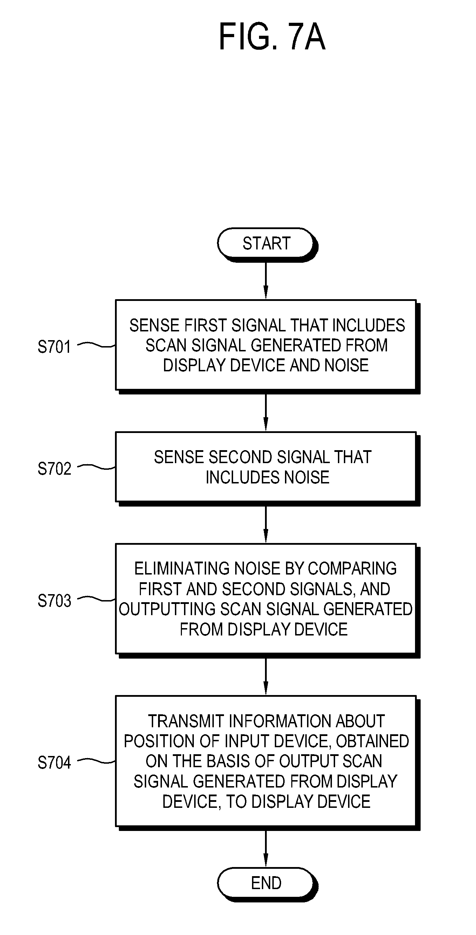

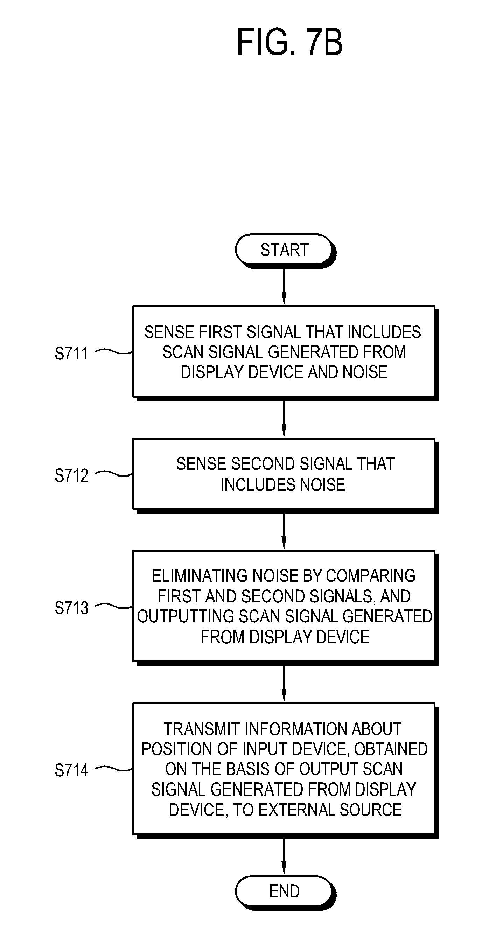

According to a first exemplary embodiment, the input device 200 may calculate coordinate information about a position where the input device 200 points (or touches) by sensing a signal generated from a display device 800, and transmits it to the display device 800 or an external source 900. For example, the input device 200 senses infrared emitted from a plasma display panel television (PDP TV) and obtains coordinate information about a position where the input device 200 points to (or touches), thereby transmitting the obtained coordinate information to the PDP TV. In this case, the PDP TV may perform a control operation based on the coordinate information from the input device 200. This will be described with reference to FIGs. 2A and 7A. Further, the input device 200 may sense infrared emitted from a large format display (LFD) and obtain its coordinate information, thereby transmitting the obtained coordinate information to a computer. In this case, the computer may perform a control operation based on the coordinate information of the input device 200, in which the input device 200 may be used like a mouse. This will be described with reference to FIGs. 2B and 7B.

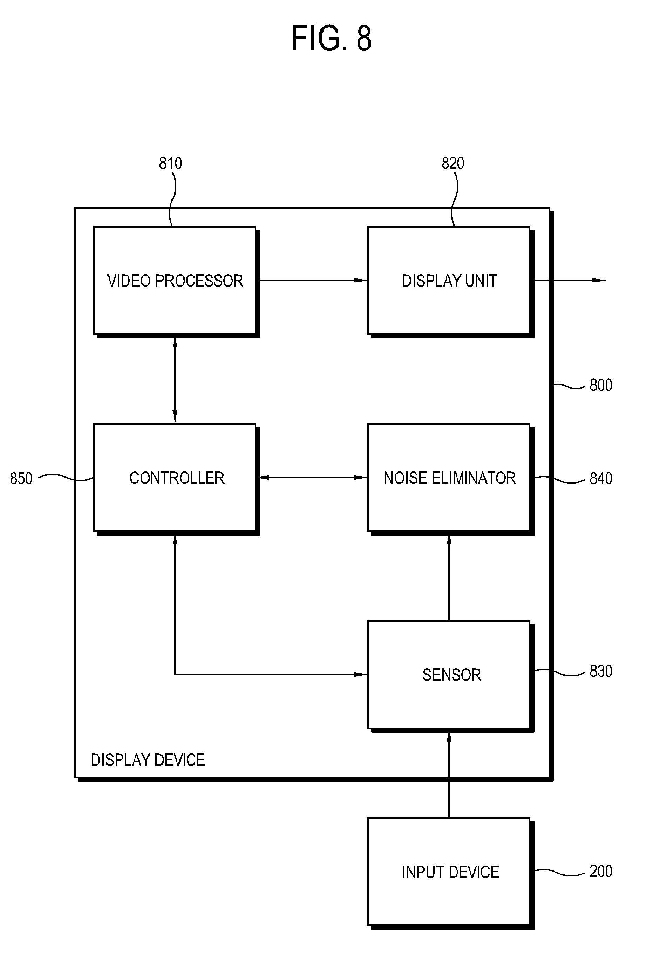

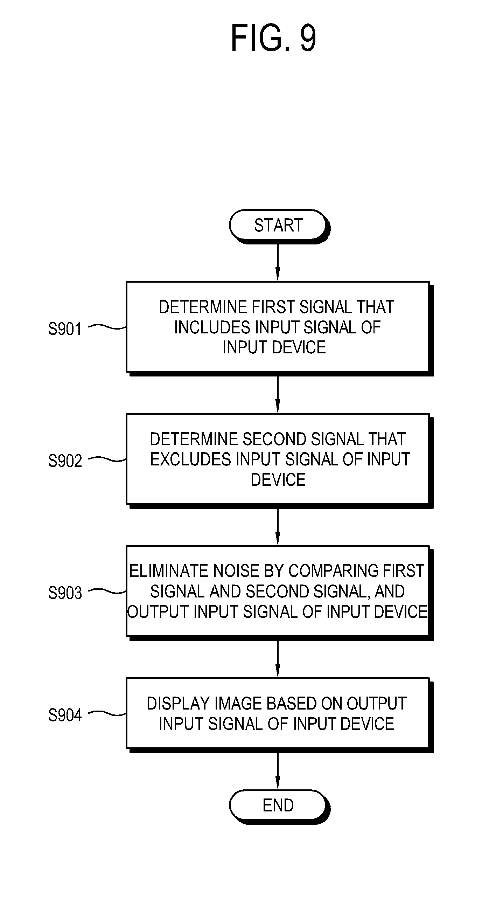

According to a second exemplary embodiment, the display device 800 may calculate coordinate information about the input device 200 by sensing a signal generated from the input device 200 and, and perform a control operation based on the coordinate information. To this end, the input device 200 may include a light source for emitting a predetermined kind of light. For example, a digital TV may sense a laser beam generated from a laser pointer and obtain coordinate information of the laser pointer, thereby performing a control operation based on the obtained coordinate information. This will be described with reference to FIGs. 8 and 9.

FIG. 2A is a block diagram showing a configuration of the input device 200 according to an exemplary embodiment.

In this exemplary embodiment, the input device 200 may include a pen-type pointing device having a sensor for sensing a signal such as infrared or the like generated from the electronic device, but not limited thereto. Instead of the pen-type pointing device, the input device 200 may have various types.

The input device 200 in this embodiment may include a sensor 210, a noise eliminator 220, a controller 230 and a communication unit 240.

The sensor 210 may sense a first signal including a scan signal generated from the display device 800 and noise, and a second signal including the noise. For example, the sensor 210 may sense an infrared signal corrupted with electromagnetic interference (EMI) noise since the input device 200 is too near to the display apparatus 800 to be affected by the EMI. The signal sensed by the sensor 210 includes an infrared signal, laser signal, and or the like.

The sensor 210 may be achieved in the form of a circuit. In detail, the sensor 210 may include a first circuit for sensing the first signal and a second circuit for sensing the second signal, in which the first circuit may include a photo-detector (PD) for sensing a scan signal generated from the display device 800. In this case, the first circuit and the second circuit may have the same configuration except the presence of the photo-detector. Further, the first circuit and the second circuit may be designed symmetrically with respect to a signal input terminal.

The noise eliminator 220 may eliminate noise by comparing the first signal and the second signal and output a scan signal generated from the display device 800. Specifically, the noise eliminator 220 can eliminate the noise on the basis of a difference between the first signal and the second signal. For example, an original scan signal generated from the display device 800 can be obtained without noise by excluding a second signal level from a first signal level.

The controller 230 may control the communication unit 240 to send the display device 800 information about a position of the input device 200, in which the information is obtained on the basis of the scan signal generated from the display device 800 and output from the noise eliminator 220.

According to an exemplary embodiment, the input device 200 can calculate its coordinate information. In this case, the information about the position of the input device 200 may include the coordinate information of the input device 200. To this end, the sensor 210 determines a sync signal indicating a start of a scan period of the display device 800 and a sensing point of time with regard to the first signal, and the controller 230 determines the coordinate information of the input device 200 on the basis of the sensing points of time with regard to the sync signal and the first signal. For example, if the display device 800 scans a PDP panel in sequence and thus pixels of the PDP panel sequentially emit infrared signals, the input device 200 senses the infrared signal emitted from the pixel at a position the input device is pointing to (or touching). Since the infrared signals are sequentially generated in the respective pixels, the sensing point of time is varied depending on the positions where the input device 200 points. Thus, it is possible to calculate the position where the input device currently points on the basis of the sensing point of time.

Meanwhile, the sync signal indicates that the display panel starts emitting the infrared, which is a surface emitting signal for making the whole pixels on the display panel simultaneously emit light at predetermined time intervals and predetermined times. Thus, it is possible to know an infrared-emitting point of time even if the input device 200 points to (or touches) any position on the display panel. According to another exemplary embodiment, the display device 800 can calculate the coordinate information of the input device 200. In this case, the information about the position of the input device 200 may correspond to the difference in the sensing point of time between the sync signal and the first signal. To this end, the sensor 210 determines the sensing points of time with regard to the sync signal indicating the start of the scan period of the display device 800 and the first signal, and the controller 230 controls the communication unit 240 to send the display device 800 the information about the difference in the sensing point of time between the sync signal and the first signal, which is calculated on the basis of the information sensed by the sensor 210. Meanwhile, a detailed method for determining the coordinate information of the input device 200 is the same as described above.

In each exemplary embodiment, the display device 800 may perform control on the basis of the information about the position of the input device 200, received from the input device 200.

The communication unit 240 can communicate with the display device 800. Specifically, the communication unit 240 can transmit the information about the position of the input device 200 to the display device 800.

The communication implemented in the communication unit 240 may include various wired/wireless communication such as Bluetooth communication, infrared (IR) communication, Zigbee communication, Local Area Network (LAN) communication, Wireless LAN (WLAN) communication, etc.

FIG. 2B is a block diagram showing a configuration of an input device according to an exemplary embodiment.

The input device 200 in this exemplary embodiment includes the sensor 210, the noise eliminator 220, the controller 230 and the communication unit 240. The controller 230 may control the communication unit 240 to transmit obtained information about a position of the input device 200 to an external source 900. Other configurations and operations in this exemplary embodiment are similar to those described with reference to FIG. 2A except that the obtained information about the position of the input device 200 is transmitted not to the display device 800 but to the external source 900, and thus repetitive descriptions thereof will be avoided.

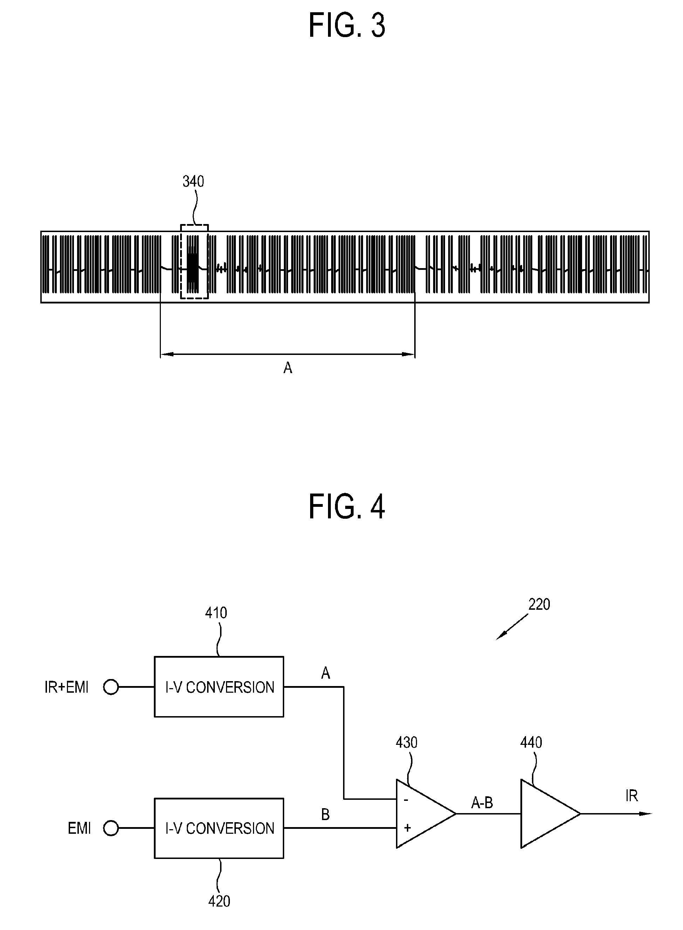

FIG. 3 shows a waveform of a signal sensed in the input device 200 according to an exemplary embodiment.

'A' indicates a section where one video frame is displayed. During the section 'A', the first signal including the scan signal generated from the display device 800 and noise may be input and the second signal including noise may be input. In the meantime, the sync signal indicating the start of the scan period of the display device 800 may be input during a predetermined section 340 within the section 'A'. The sync signal is used as a reference time for determining the sensing point of time with regard to the first signal employed for calculating the coordinate information of the input device 200.

FIG. 4 schematically shows that a signal is processed in a noise eliminator according to an exemplary embodiment.

Here, the noise eliminator 220 may include a first signal converter 410, a second signal converter 420, an operator 430 and an amplifier 440.

The first signal converter 410 senses and measures a current level of the first signal and converts the measured current level into a voltage level.

The second signal converter 420 senses and measures a current level of the second signal and converts the measured current level into a voltage level.

The operator 430 compares the first signal and the second signal and calculates difference between the first and second signals. Specifically, the scan signal generated from the display device 800 can be obtained as the voltage level output from the second signal converter 420 is subtracted from the voltage level output from the first signal converter 410.

The amplifier 440 amplifies a result obtained by the operator 430.

Thus, the noise eliminator 220 can output the original scan signal generated from the display device 800 while filtering out the EMI.

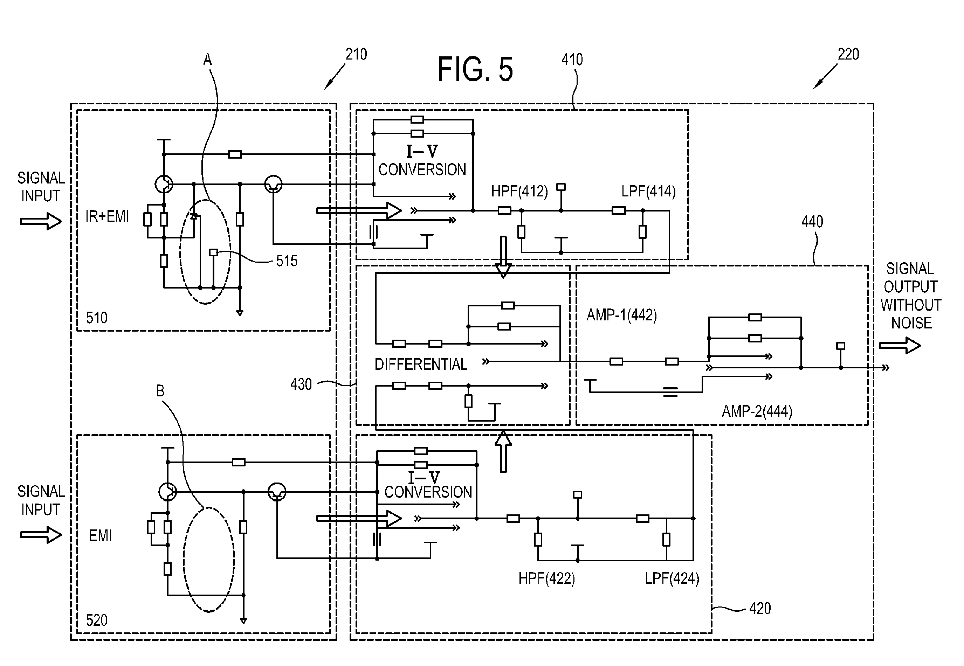

FIG. 5 shows a circuit diagram of the sensor 210 and the noise eliminator 220 according to an exemplary embodiment.

The sensor 210 may be configured in the form of a circuit that a predetermined pattern is formed on a printed circuit board (PCB) and a photo-detector 515 and other components are mounted on the PCB.

The photo-detector 515 senses an infrared pattern signal. The photo-detector 515 is a device that serves to detect a photo signal and converts it into an electric signal, which may include a diode-type photo-detector, a photoconductive photo-detector, etc. in accordance with photo-detecting devices or the kinds of the photo-signal to be detected.

In an alternative exemplary embodiment, a photodiode, a laser detector and other sensors capable of sensing various signals may be used instead of the photo-detector 515 in order to sense various signals.

The PCB pattern, and the components (e.g., a signal amplifier or the like) other than the photo-detector 515 can sense the EMI.

The sensor 210 may include a first circuit 510 and a second circuit 520.

The first circuit 510 is embedded with the photo-detector 515 (A). The photo-detector 515 senses the scan signal generated in the form of infrared from the display device 800. Also, the PCB pattern and the components other than the photo-detector 515, which constitute the first circuit 510, sense the EMI noise. Thus, the first circuit 510 can sense the first signal including the scan signal of the display device 800 and the noise.

The second circuit 520 is not embedded with the photo-detector 515 (B). The second circuit 520 cannot sense the scan signal generated in the form of infrared from the display device 800, since it excludes the photo-detector 515. On the other hand, the PCB pattern and the components, which constitute the second circuit 520, can sense the EMI noise. Thus, the second circuit 520 can sense the second signal including the noise.

Further, the first circuit 510 and the second circuit 520 may be achieved by a mirror circuit where they are designed symmetrically to each other. Specifically, the first circuit 510 and the second circuit 520 may be designed to be symmetrical to each other with respect to a signal input terminal. In this case, the first circuit 510 and the second circuit 520 may be the same except the presence of the photo-detector 515. For example, two circuits formed with the same PCB pattern are symmetrically provided, but the photo-detector 515 is added to one circuit to receive both the infrared and the EMI noise while the photo-detector 515 is not added to the other circuit to receive only the EMI noise. Thus, it is possible to obtain only an infrared (IR) signal excluding the EMI noise by calculating difference between the two received signals.

The noise eliminator 220 may be configured in the form of a circuit that a predetermined pattern is formed on a printed circuit board (PCB) and amplifiers 442, 444 and other components are mounted on the PCB.

The noise eliminator 220 may include the first signal converter 410, the second signal converter 420, the operator 430 and the amplifier 440. These elements are described with reference to FIG. 4, and thus repetitive descriptions thereof will be avoided.

Meanwhile, the noise eliminator 220 may further include a high pass filter (HPF) 412, 422, a low pass filter (LPF) 414, 424, etc.

A PDP touch-pen input device calculates coordinate information by sensing a infrared pattern signal corresponding to a certain frequency band and emitted when a PDP performs electric discharge for scanning. In this case, it is difficult to calculate exact coordinate information because infrared noise light such as natural light, fluorescent light, etc., emitted from an external light source, and electromagnetic waves emitted from various electronic devices, a PDP set, etc. are mixed with a predetermined IR pattern signal having the coordinate information and then output. Thus, the EMI noise generated by the PDP device causes the PDP touch-pen input device to malfunction.

Accordingly, to eliminate the EMI noise generated by the PDP device, there have been proposed various shielding methods such as installing an EMI filter in the PDP set, forming an EMI loop using a back cover, etc. However, such a method has a limit in eliminating the EMI noise effectively enough not to disturb the input device.

Further, since the EMI noise generated from the PDP apparatus has a frequency band overlapping with that of a predetermined infrared pattern signal, it is not easy for a conventional signal processing technology to divide the infrared pattern signal and the EMI.

According to an exemplary embodiment, the circuits are used to selectively eliminate only the EMI noise from the infrared pattern signal, so that it is possible to detect the exact coordinate information of the input device. Further, it is also possible to selectively eliminate the EMI noise with software, without relying on hardware elements such as a screened film, a shield or the like.

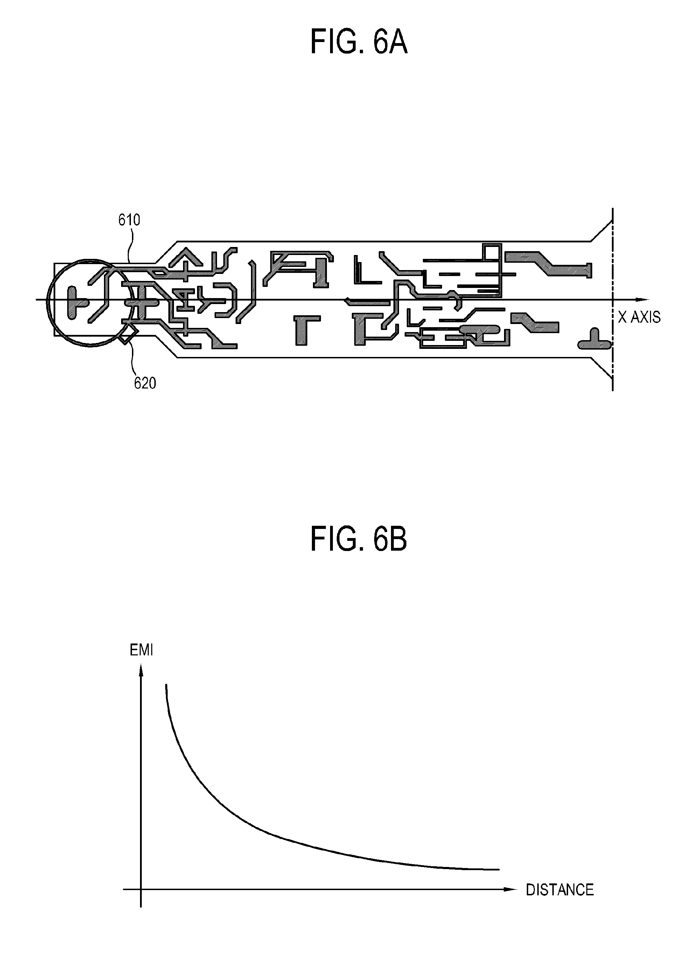

FIG. 6A shows a printed circuit board (PCB) pattern shown in the circuit diagram of FIG. 5.

A first PCB pattern 610 for sensing the first signal containing the scan signal of the display device 800 and noise and a second PCB pattern 620 for sensing the second signal containing noise may be designed symmetrically to each other. Referring to FIG. 6A, the first and second PCB patterns 610 and 620 formed on the PCB are equally designed, and symmetrical to each other with respect to an X-axis.

However, if the first circuit 510 and the second circuit 520 are designed corresponding to the respective patterns 610 and 620, they are different in the presence of the photo-detector 515.

FIG. 6B is a graph showing an EMI noise level measured in accordance with distance.

In general, the EMI noise is inverse proportion to distance. For instance, the more distant from a spot where the EMI noise originates (i.e., the more distant from the adjacent display device 800), the lower the measured level of the EMI noise.

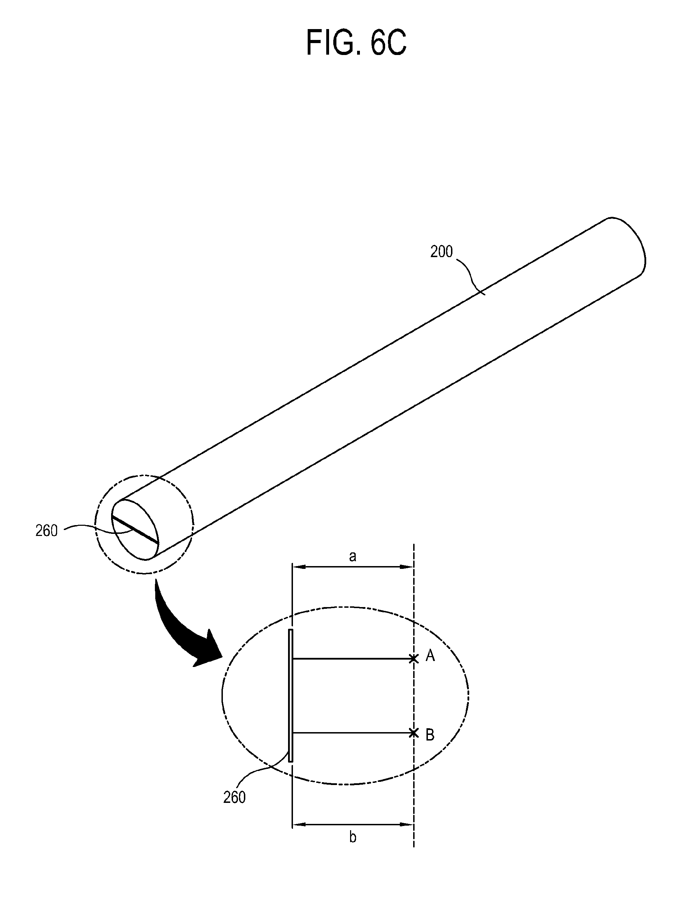

FIG. 6C is an enlarged cross-section of the input device according to an exemplary embodiment.

In FIG. 6C, a = b. Thus, a spot A spaced apart at a distance a from the signal input terminal 260 and a spot B spaced apart at a distance b from the signal input terminal 260 are spaced apart at the same distance with reference to the signal input terminal 260.

In this case, the EMI noise measured at the spot A and the EMI noise measured at the spot B are approximately the same. Hence, when a signal level measured at the spot A and a signal level measured at the spot B undergo an operation, the EMI noise can be most effectively eliminated.

Accordingly, in the case that an IR+EMI receiver for sensing the first signal and an EMI receiver for sensing the second signal are designed symmetrically with respect to the signal input terminal 260, the EMI noise can be effectively eliminated using signal levels at two spots having the same EMI noise, so that it is possible to more exactly sense the coordinate information of the input device 200.

FIG. 7A is a control flowchart of the input device 200 according to an exemplary embodiment.

At operation S701, the input device 200 senses the first signal containing the scan signal generated from the display device 800 and noise.

At operation S702, the input device 200 senses the second signal containing the noise.

At operation S703, the input device 200 eliminates the noise by comparing the first signal and the second signal, and outputs the scan signal generated from the display device 800.

At operation S704, the input device 200 transmits information about the position of the input device 200, obtained on the basis of the scan signal generated from the display device 800, to the display device 800.

FIG. 7B is a control flowchart of the input device according to an exemplary embodiment.

At operation S711, the input device 200 senses the first signal containing the scan signal generated from the display device 800 and noise.

At operation S712, the input device 200 senses the second signal containing the noise.

At operation S713, the input device 200 eliminates the noise by comprising the first signal and the second signal, and outputs the scan signal generated from the display device 800.

At operation S714, the input device 200 transmits information about the position of the input device 200, obtained on the basis of the scan signal generated from the display device 800, to the external source 900.

FIG. 8 is a block diagram showing a configuration of a display device according to an exemplary embodiment.

According to an exemplary embodiment, the display device 800 may include a television (TV), a mobile terminal, an electronic book, a personal digital assistant (PDA), a laptop computer, a desktop computer, etc. Further, any display device can be regarded as the display device 800 according to an exemplary embodiment as long as it can receive a user's input through the input device 200 and cause electromagnetic interference (EMI) with peripheral devices.

The display device 800 in this embodiment may include a video processor 810, a display unit 820, a sensor 830, a noise eliminator 840, and a controller 850.

The video processor 810 can process a video signal. Specifically, the video processor 810 may perform at least one of decoding, scaling, brightness control, contrast control, tone control, and image enhancement.

The display unit 820 may display an image based on a video signal processed by the video processor 810. For this, the display unit 820 may include a display panel (not shown) achieved in the form of a liquid crystal display (LCD), an organic light emitting diode (OLED), a plasma display panel (PDP), or etc. and a panel driver (not shown) for driving the display panel.

The sensor 830 may sense a first signal containing an input signal of the input device 200 and noise, and a second signal containing the noise.

In this case, the sensor 830 may be achieved in the form of a circuit. Specifically, the sensor 830 may include a first circuit for sensing the first signal, and a second circuit for sensing the second signal. Here, the first circuit and the second circuit may be equally configured, but a photo-detector (PD) for sensing the input signal of the input device 200 may be added to only the first circuit. In other words, the first circuit and the second circuit are the same except the presence of the photo-detector. Further, the first circuit and the second circuit may be designed symmetrically to each other.

In this exemplary embodiment, the first and second circuits are similar to those described with reference to FIGs. 4 to 6C, and thus repetitive descriptions thereof will be avoided.

The noise eliminator 840 may eliminate the noise by comparing the first signal and the second signal, and outputs the input signal of the input device 200. Specifically, the noise eliminator 840 can eliminate the noise on the basis of difference between the first signal and the second signal. For example, the original input signal level of the input device 200 can be obtained by filtering off the second signal level from the first signal level.

The controller 850 may control the video processor 810 on the basis of the input signal of the input device 200, output from the noise eliminator 840. For example, the controller 850 may control the video processor 810 to display a text, an image or the like in response to the input signal of the input device 200.

The controller 850 may determine coordinates of a position where the input device 200 points to (or touches), on the basis of the input signal of the input device 200. In this case, the controller 850 may use various methods to determine the coordinates of the position to which the input device 200 is pointing (or touching). For example, the controller 850 may determine the coordinates of the pointing position by recognizing the coordinates at which predetermined light is received from the input device 200. Since the pointing position of the input device 200 receives predetermined light from the input device 200, the amount of received light at the pointing position is greater than those at other positions.

The input device 200 may generate a predetermined photo-signal. To this end, the input device 200 may include a light source for generating predetermined light.

FIG. 9 is a control flowchart of the display device according to an exemplary embodiment.

The display device 800 determines the first signal including the input signal of the input device 200 at operation S901. The first signal includes the input signal of the input device 200 and the noise.

The display device 800 determines the second signal excluding the input signal of the input device 200 at operation S902. The second signal may include the noise. In this case, the display device 800 eliminates the noise on the basis of comparison between the first signal and the second signal, and outputs the input signal of the input device 200 at operation S903. Specifically, the display device 800 can eliminate the noise on the basis of difference between the first signal and the second signal. For example, the input signal level of the input device 200 can be obtained by filtering off the second signal level from the first signal level.

The display device 800 displays an image based on the filtered input signal of the input device 200 at operation S904. Specifically, the display device 800 may calculate the coordinates of the input device 200 on the basis of the input signal of the input device 200, and perform control based on the coordinates.

As described above, coordinate information of an input device is exactly detected by selectively eliminating EMI noise from a predetermined IR pattern signal, and a software manner instead of a conventional hardware manner is used to selectively eliminate EMI.

Although a few exemplary embodiments have been shown and described, it will be appreciated by those skilled in the art that changes may be made in these exemplary embodiments without departing from the principles of the invention.

## Claims

1. An input device comprising:
a communication unit operable to communicate with a display device;
a sensor operable to sense a first signal containing noise and a scan signal generated from the display device, and a second signal containing the noise;
a noise eliminator operable to compare the first signal and the second signal;
and
a controller operable to control the communication unit to output position information of the input device, wherein the position information is based on the comparing of the first signal and the second signal.

2. The input device according to claim 1, wherein the sensor includes:
a first circuit operable to sense the first signal; and
a second circuit operable to sense the second signal,
wherein the first circuit includes a photo-detector operable to sense the scan signal generated from the display device.

3. The input device according to claim 2, wherein the first circuit and the second circuit are disposed symmetrically to each other with respect to an axis of the input device.

4. The input device according to claim 1, wherein the noise eliminator compares the first signal and the second signal by determining a difference between the first signal and the second signal.

5. The input device according to claim 1, wherein the display device includes a display panel, and
wherein the display panel includes a plasma display panel (PDP).

6. The input device according to claim 1, wherein the input device includes a pen-type pointing device.

7. The input device according to claim 1, wherein the position information of the input device includes coordinate information of the input device.

8. The input device according to claim 7, wherein the sensor is operable to determine points of time at which a sync signal, which indicates a start of a scan of the display device, and the first signal are sensed, and
wherein the controller determines the coordinate information of the input device based on the points of time at which the sync signal and the first signal are sensed.

9. The input device according to claim 1, wherein the position information of the input device corresponds to a difference between points of time at which the sync signal and the first signal are sensed.

10. The input device according to claim 1, wherein the controller is further operable to control the communication unit to output the position information to the display device.

11. The input device according to claim 1, wherein the communication unit is further operable to communicate with an external source, and wherein the controller is further operable to control the communication unit to output the position information to the external source.

12. A system comprising an input device and a display device, **characterized by** the input device according to any one of claims 1 to 11, and the display device performs a control operation based on the position information received from the input device.

13. A method of controlling an input device, the method comprising:
sensing a first signal containing noise and a scan signal generated from a display device;
sensing a second signal containing the noise;
comparing the first signal and the second signal; and
outputting position information of the input device, wherein the position information is based on the comparing of the first signal and the second signal.
